Europäisches Patentamt

European Patent Office

Office européen des brevets

(11) Veröffentlichungsnummer: **0 412 212 A1**

## EUROPÄISCHE PATENTANMELDUNG

(21) Anmeldenummer: 89307999.6

(22) Anmeldetag: 07.08.89

(51) Int. Cl.⁵: **F16K 31/06, F16K 11/044**

(43) Veröffentlichungstag der Anmeldung:
**13.02.91 Patentblatt 91/07**

(84) Benannte Vertragsstaaten:
**DE GB**

(71) Anmelder: **Siemens Aktiengesellschaft**
**Wittelsbacherplatz 2**
**D-8000 München 2(DE)**
(84) **DE**

Anmelder: **SIEMENS PLC**

**Siemens House Windmill Road**
**Sunbury-on-Thames Middlesex, TW16**
**7HS(GB)**
(84) **GB**

(72) Erfinder: **Bowerman, Hugh**
**19, Caradon Close**
**Woking GU21 2DU(GB)**
Erfinder: **Bell, Ian**
**4, Reidon Hill**
**Bisley Surrey GU21 2SQ(GB)**

(54) Magnetventil für ein flüssiges oder gasförmiges Medium und Verfahren zu dessen Steuerung.

(57) In einer Ventilkammer (13) ist ein Steuerkolben (15) in zwei Schaltstellungen bewegbar angeordnet. Der Steuerkolben (15) ist über einen Ventilstößel (16) mit einem Anker (28) verbunden, dem ein Elektromagnet (22) zum Umschalten von einer Schaltstellung in die andere zugeordnet ist. Dabei ist der Ventilstößel (16) über mindestens eine Feder (35) mit dem Anker (28) in der Weise verbunden, daß bei Betätigung des Elektromagneten (22) durch einen Steuerimpuls der Anker (28) bewegt und die Feder (35) gespannt wird. Durch den Druck der Feder (35) wird dann der Ventilstößel (16) bewegt und der Steuerkolben (15) in die andere Schaltlage gebracht, in der er verrastet wird.

FIG 1

EP 0 412 212 A1

## MAGNETVENTIL FÜR EIN FLÜSSIGES ODER GASFÖRMIGES MEDIUM UND VERFAHREN ZU DESSEN STEUERUNG

Die Erfindung bezieht sich auf ein Magnetventil für ein flüssiges oder gasförmiges Medium und ein Verfahren zur Steuerung eines Magnetventils, das in automatisierten Anlagen, insbesondere in der Offshore-Technik, anwendbar ist, um den Mediumfluß zu starten, stoppen oder umzulenken.

In hydraulisch gesteuerten Anlagen findet man besonders bei stationären Geräten den Elektromagneten als häufigstes Betätigungselement von Ventilen, während bei fahrbaren Geräten die mechanische Betätigung über Taster oder Nebel die häufigste Betätigungsart ist. Magnetventile mit zwei Schaltstellungen werden meist gegen eine Rückstellfeder betätigt, die das Ventil in Nullstellung hält, solange keine Betätigungskraft wirkt. Es sind auch Ventile mit Verrastung in jeder Schaltstellung bekannt. Bei Magnetventilen ist eine Verrastung in der Ausführung mit zwei Schaltstellungen möglich. Werden dabei beide Schaltstellungen durch Elektromagnete herbeigeführt, so bleibt auch bei Ausfall der elektrischen Steuerspannung die zuletzt geschaltete Stellung erhalten. Wegen der Verrastung genügt ein elektrischer Steuerimpuls zur Betätigung. Um dabei ausreichende Stellkräfte zu erzielen, werden für die Erzeugung der Steuerimpulse Stromimpulse mit verhältnismäßig großer Energie gewählt. Daher müssen in fernbedienten Geräten für die Steuerung von Magnetventilen leistungsstarke schwere elektrische Batterien zur Stromversorgung eingesetzt werden.

Der Erfindung liegt die Aufgabe zugrunde, ein Magnetventil und ein Verfahren zur Steuerung eines derartigen Ventils anzugeben, bei dem auch mit einem elektrischen Steuerimpuls sehr kurzer Dauer und geringer Leistung ausreichende Stellkräfte zum Betätigen des Magnetventils erzielt werden können, so daß auch bei Einsatz von elektrischen Speisespannungsquellen kleinerer Größe und Leistung ein sicherer Betrieb eines Magnetventils möglich ist. Ferner soll das Magnetventil auch eine unmittelbare Steuerung eines Mediums mit relativ hohem Druck ermöglichen.

Diese Aufgabe wird erfindungsgemäß durch ein Magnetventil für ein flüssiges oder gasförmiges Medium gelöst, bei dem in einer Ventilkammer ein Steuerkolben in zwei Schaltstellungen bewegbar angeordnet ist, welcher über einen Ventilstößel unter Zwischenschaltung einer Feder mit einem Anker verbunden ist, dem ein Elektromagnet zum Umschalten von einer Schaltstellung in die andere und Mittel zum Verrasten des Steuerkolbens in zumindest einer Schaltstellung zugeordnet sind.

Auf diese Weise wird bei einer Betätigung des Elektromagneten durch einen Steuerimpuls erst der Anker bewegt und die Feder gespannt und dann durch den Druck der Feder der Ventilstößel bewegt und der Steuerkolben in die andere Schaltlage gebracht, in der er verrastet wird. Dadurch ist nur ein sehr kurzer elektrischer Steuerimpuls, beispielsweise von nur einigen 100 Millisekunden Dauer, erforderlich, um das Magnetventil zu schalten. Die Belastung der Speisequelle, die eine Batterie mit einer Spannung von 24 V sein kann, beträgt dabei maximal 50 W.

Es ist günstig, den Ventilkörper aus einem korrosionsbeständigen Material zu fertigen und den Elektromagneten in einem korrosionsbeständigen Gehäuse unterzubringen, das stirnseitig an den Ventilkörper angesetzt ist. Ein derartiges Magnetventil ist auch in der Offshore-Technik unter Wasser einsetzbar.

In vorteilhafter Weise ist der Elektromagnet durch zwei in dem Gehäuse koaxial angeordnete Topfkerne gebildet, deren Öffnungen unter Zwischenschaltung des Ankers einander zugekehrt sind und deren Mittelschenkel mit mindestens je einer elektrischen Wicklung und einer zentralen Bohrung versehen sind, in welche der Ventilstößel eingeführt und in welcher der Anker beweglich geführt ist, der zwischen zwei Federn angeordnet am Ventilstößel axial verschiebbar gelagert ist.

Es ist günstig, wenn der dem Anker zugewandte Endbereich des Ventilstößels eine Gewindebohrung aufweist, in die eine Schraube eingedreht ist, an der zwischen den zwei Federn der Anker axial verschiebbar gelagert ist.

Die Gewindebohrung kann in einer Justierhülse angeordnet sein, die in einem Außengewinde am Endbereich des Ventilstößels eingedreht ist. Auf diese Weise ist eine einfache Justierung des Ankers gegenüber dem Steuerkolben möglich.

Die Mittel zum Verrasten des Steuerkolbens können erfindungsgemäß durch einen mit dem Steuerkolben axial verbundenen Stellkolben gebildet sein, der in einem Zylinder geführt ist, welcher sich an den Ventilraum anschließt, in den das zu steuernde Medium eingeführt wird, wobei der innere Durchmesser der Öffnung eines äußeren Ventilsitzes kleiner ist als der der Zylinderdichtung. Auf diese Weise wird der Steuerkolben durch den Druck des zu steuernden Mediums am äußeren Ventilsitz anliegend gehalten (das Ventil ist geschlossen).

Hydraulisch verrastete Ventile können bei Verlust des Speisedruckes ihre Lage nicht mehr einhalten. Dem wird gemäß einer vorteilhaften Weiterbildung der Erfindung durch Anordnung einer zusätzlichen Feder, die den Steuerkolben in einer vorgegebenen Lage oder in einer Lage am Ventilsitz festhält, aus der er sich lösen würde. Vorzugsweise ist die zusätzliche Feder zwischem dem Boden des Ventilkörpers und dem Steuerkolben koaxial zum Ventilstößel angeordnet. Auf diese Weise wird eine hydraulische Verrastung, nicht nur so lange der Speisedruck ansteht, er reicht, sondern auch dann, wenn bei Abfall des Speisedruckes auf den Umgebungsdruck das Ventil eine vorgegebene Lage, insbesondere eine geschlossene Lage einnehmen soll.

Die zwischen dem Anker und dem Ventilstößel angeordnete Feder kann so vorgespannt sein, daß der Steuerkolben in seiner Position durch eine Kombination aus dem Federdruck und dem Ungleichgewicht der Kräfte gehalten wird, die durch den kleineren inneren Durchmesser des äußeren Ventilsitzes und den größeren inneren Durchmesser des Stellkolbens bzw. der zugehörigen Zylinderdichtung erzeugt werden.

Die Mittel zum Verrasten des Steuerkolbens können auch durch einen mit dem Steuerkolben axial verbundenen Stellkolben gebildet sein, der in einem Zylinder geführt ist, welcher sich an den Ventilraum anschließt, in den das zu steuernde Medium eingeführt wird, wobei der innere Durchmesser der Öffnung eines inneren Ventilsitzes geringfügig größer als der der Zylinderdichtung ist. Dadurch wird der Steuerkolben an dem inneren Ventilsitz angedrückt, so lange der Speisedruck ansteht (das Ventil ist offen und das Medium fließt in die Arbeitsleitung).

Werden beide Ventilsitze entsprechend bemessen, so wird eine selbsttätige Rastung des Schiebers in jeder Schaltstellung ohne zusätzliche mechanische Rastteile durch das gesteuerte Medium ermöglicht.

Der Zylinder kann eine Zylinderdichtung haben, die zweckmäßigerweise als Lippendichtung ausgebildet ist. Auf diese Weise werden Losreißkräfte bei der Umsteuerung des Ventils, die Reibung und Leckverluste klein gehalten. Es ist auch möglich, am Stellkolben eine Ringdichtung anzuordnen, die als Profildichtung ausgebildet ist.

Die Erfindung betrifft auch ein Verfahren zur Steuerung eines Magnetventils für ein flüssiges oder gasförmiges Medium, bei dem gemäß der Erfindung an eine Wicklung eines Elektromagneten, dem ein Anker zugeordnet ist, ein elektrischer Steuerimpuls angelegt wird, durch die Bewegung des Ankers eine Feder gespannt wird, durch die gespannte Feder ein in einer Ventilkammer angeordneter Steuerkolben mit zwei Schaltlagen von einer Schaltlage in die andere bewegt wird, und der Steuerkolben in der erreichten Schaltlage verrastet wird.

In der Zeichnung sind Ausführungsbeispiele der Erfindung dargestellt. Darin zeigen:

Fig. 1 ein 3/2-Wegeventil im Schnitt,

Fig. 2 einen vergrößerten Schnitt durch den Ventilkörper gemäß Fig. 1,

Fig. 3 ein Diagramm mit einer Darstellung von Kräfteverhältnissen des Ankers und Steuerkolbens und

Fig. 4 einen Ventilkörper eines weiteren 3/2-Wegeventiles in einem Halbschnitt.

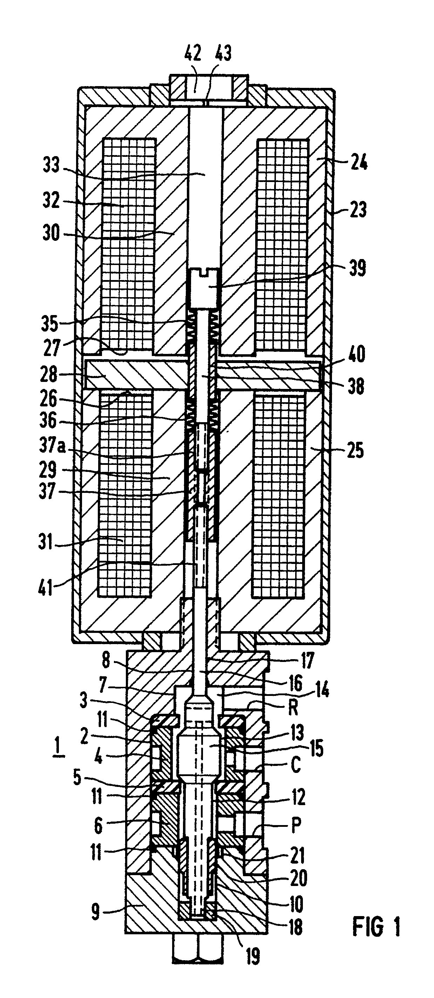

In Fig. 1 ist ein 3/2-Wege-Magnetventil gezeigt, das beispielsweise in der Offshore-Technik für die Steuerung eines gasförmigen oder flüssigen Mediums auch unter Wasser eingesetzt werden kann. Für die Steuerung größerer Mengen eines Mediums ist das Wegeventil als Vorsteuerventil für ein hydraulisch betätigtes Wegeventil einsetzbar. Es hat dort die Aufgabe, ein Medium wahlweise zu einer der beiden Seiten des hydraulisch betätigten Wegeventils zu steuern.

Ein Ventilkörper 1 hat eine Bohrung 2, welche einen inneren Ventilsitz 3, einen inneren Abstandskörper 4, einen äußeren Ventilsitz 5 und einen äußeren Abstandskörper 6 aufnimmt. In dem Ventilkörper 1 sind zwei weitere, kleinere Bohrungen 7, 8 mit der Längsachse des Ventilkörpers 1 fluchtend angebracht. Die Ventileinsätze 3, 4, 5, 6 werden durch einen Deckel 9 mit Innenflansch im Ventilkörper 1 gehalten. Der Deckel 9 hat eine Sacklochbohrung 10.

An den beiden Abstandshaltern 4 und 6 sowie am Innenflansch des Deckels 9 sind ringförmige Aussparungen vorgesehen, in denen ein Dichtring 11, insbesondere ein O-Ring, angebracht ist. Durch diese Dichtringe 11 wird der Ventilinnenraum in drei Kammern 12, 13, 14 geteilt und jeweils eine Kammer durch eine radiale Bohrung mit einem Ventilanschluß P bzw. C bzw. R versehen. An den Ventilanschluß P wird eine Zulaufleitung angeschlossen, an den Ventilanschluß C eine Abgabe- oder Arbeitsleitung und an den Ventilanschluß R eine Rücklaufleitung für das Medium.

In der Ventilkammer 13 ist ein Steuerkolben 15 angeordnet, an dessen einer Seite ein in der Bohrung 8 geführter Ventilstößel 16 angeordnet ist, welcher durch einen Elektromagneten 22 betätigbar ist. An der anderen Seite ist der Steuerkolben 15 über einen Zapfen 18 in einem Lager 19 axial beweglich geführt. Dieses Lager 19 ist in der Sacklochbohrung 10 angeordnet. Es sind Vorkehrungen getroffen, die verhindern, daß sich der Steuerkolben drehen kann.

Zwischen dem Zapfen 18 und dem Steuerkolben 15 ist ein Stellkolben 20 angeordnet, der in die als Zylinder dienende Sacklochbohrung 10 hineinragt und dem eine Zylinderdichtung 21 an der Öffnung der Sacklochbohrung zugeordnet ist. Diese Zylinderdichtung 21 ist in vorteilhafter Weise als Lippendichtung ausgebildet. Vom Kopf des Stellkolbens 20 führen Bohrungen 20a bis 20c zur Kammer 14.

Der zur Betätigung des Steuerkolbens 15 dienende Elektromagnet 22 ist stirnseitig an den Ventilkörper 1 angesetzt. Er ist durch zwei in einem korrosionsbeständigen Gehäuse koaxial angeordnete Topfkerne 24, 25 gebildet, deren Öffnungen 26, 27 unter Zwischenschaltung eines Ankers 28 einander zugekehrt sind. An den Mittelschenkeln 29, 30 ist je eine getrennt ansteuerbare elektrische Wicklung 31, 32 oder mehrere Teilwicklungen angeordnet. Die Wicklungen sind in Gießharz eingegossen. Die Mittelschenkel 29, 30 haben ferner je eine zentrale Bohrung 33. In diese Bohrungen 33 ist der Ventilstößel 16 eingeführt.

Der Anker 28 ist zwischen zwei als Tellerfedern ausgebildeten Federn 35, 36 eingespannt und am Ventilstößel 16 axial verschiebbar gelagert. Dabei weist der dem Anker 28 zugewandte Endbereich des Ventilstößels 16 eine Gewindebohrung 37a auf, in die eine als Zylinderkopfschraube ausgebildete Schraube 38 mit ihrem Gewindeende eingedreht ist und den Anker 28 zwischen den beiden Federn 35, 36 verschiebbar haltert. Dabei hat der als Scheibe ausgebildete Anker 28 aus einem ferritischen Material eine zentrale Lagerhülse 40, die beiderseits in die zentralen Bohrungen 33 der Topfkerne hineinragt.

Die Gewindebohrung 37a ist in einer Justierhülse 37 angebracht, welche in ein Außengewinde 41 am Ende des Ventilstößels 16 eingedreht ist. Zum genauen Einstellen des Ankers 28 wird die Justierhülse 37 auf dem mit dem Gewinde 41 versehenen Ende des Ventilstößels 16 gedreht.

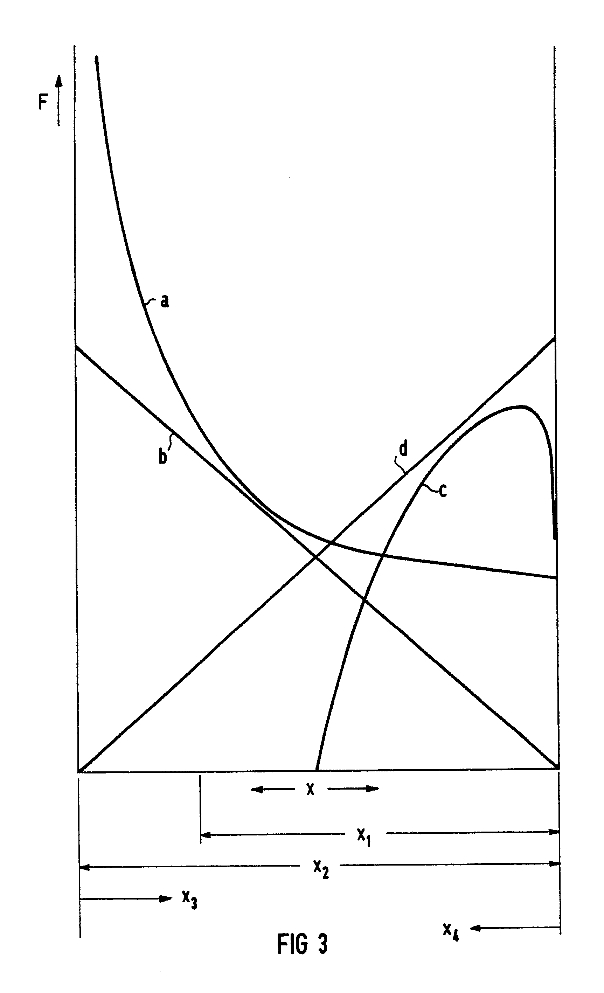

In Fig. 3 sind vier Kurven gezeigt, aus denen die Wechselwirkung zwischen dem Elektromagneten 22, der Federanordnung und dem Steuerkolben hervorgeht.

Im Diagramm ist auf der Koordinate die Kraft F aufgetragen und auf der Abszisse Wege $x_1$ - $x_4$. Darin bedeuten:

$x_1$ Hub des Steuerkolbens

$x_2$ Hub des Ankers

$x_3$ Abstand des Ankers vom Magnetkern

$x_4$ Abstand des Steuerkolbens von der anfänglichen Lage.

Die Kurve a zeigt den Kraftverlauf auf den Anker 28 des Magneten. Die Kraft hat ihr Maximum, wenn der Anker 28 am Magnetkern 24 oder 25 anliegt. Sie nimmt mit der Entfernung steil ab. Die Abnahme ist so rapid, daß dann, wenn der Anker direkt mit dem Steuerkolben verbunden wäre, die Kraft des verwendeten Magneten nicht ausreichen würde, um den den Steuerkolben 15 vom Sitz abzuheben.

Die Kurve b zeigt die Kraft, die erforderlich ist, um die Feder 35 bzw. 36 zusammenzupressen. Wenn diese Kompression durch den Elektromagneten vorgenommen werden soll, muß die Kurve b vollständig unterhalb der Kurve a liegen.

Kurve c zeigt den Kraftverlauf, der erforderlich ist, um den Steuerkolben zu bewegen. Das Maximum der erforderlichen Kraft tritt auf, wenn der Steuerkolben 15 von seinem Sitz losgebrochen ist und ergibt sich aus den hydraulischen Kräften (herrührend von dem Übergang des Förderdruckes in den Staudruck), die zu den statischen Rast- und Reibungskräften hinzukommen. Die Kraft fällt dann stark ab, da die statische Reibung in die dynamische Reibung übergeht und die Strömung sich ändert. Theoretisch ist dann, wenn keine Reibung angenommen wird, und der Steuerkolben die Hälfte des Weges zurückgelegt hat, keine Kraft mehr erforderlich, um ihn zu bewegen, da dann der Steuerkolben durch die hydraulischen Kräfte bewegt wird.

Die Kurve d zeigt die Kraft, die von der Feder 35 bzw. 36 verfügbar ist, um den Steuerkolben zu bewegen. Der Kraftverlauf ist invers zu der Kurve b.

Um den Steuerkolben 15 fließend von einem Sitz auf den anderen zu bewegen, ist es erforderlich, daß die Kurve c vollständig unter der Kurve d liegt.

Es ist günstig, den Durchmesser und Querschnitt der Zylinderdichtung 21 so klein wie möglich zu wählen und den Stellkolben 20 mit einer Oberfläche hoher Güte zu versehen. Dadurch können die Reibungsverluste sehr klein gehalten werden.

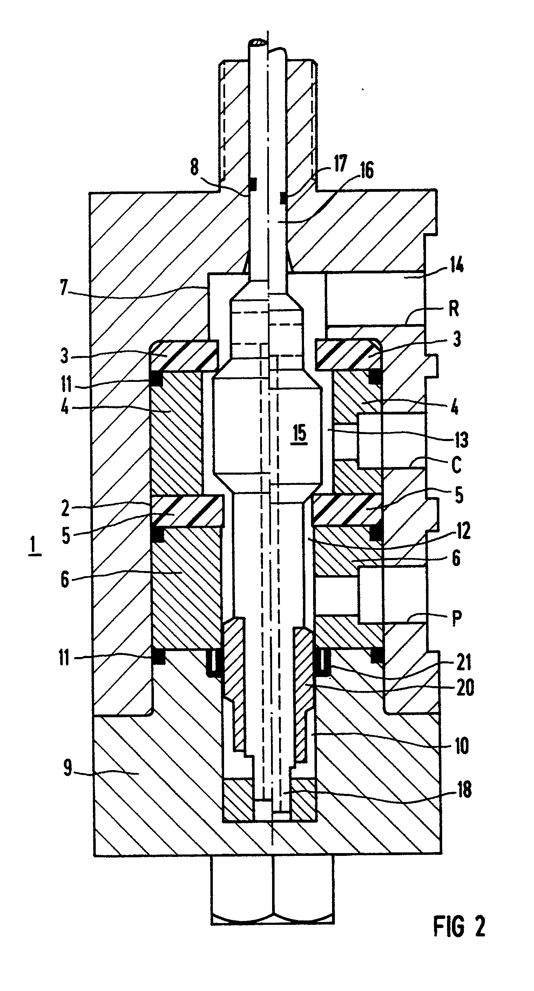

Fig. 2 zeigt einen vergrößerten Schnitt durch den Ventilkörper 1 in zwei Lagen des Steuerkolbens 15. Die linke Schnitthälfte zeigt die offene Position des Ventils, in der das Medium über den Zulaufkanal P (supply) in die Ventilkammer und von dort über den geöffneten Steuerkolben in die Kammer 13 gelangen kann, von wo es über den Abgabe-Anschluß C (service) in eine Arbeitsleitung weiterfließt.

In der rechten Schnitthälfte ist die geschlossene Position des Steuerkolbens 15 gezeigt, in der der Abgabe-Anschluß C (die Arbeitsleitung) mit der Rücklaufleitung R verbunden wird.

Der Steuerkolben 15 wird zwischen den zwei dargestellten Positionen durch eine Verstellkraft bewegt, welche vom Elektromagneten 22 ausgeht.

Um das Ventil hydraulisch zu verrasten, werden die inneren Durchmesser des inneren und äußeren Ventilsitzes und der Zylinderdichtung 21 derart aufeinander abgestimmt, daß eine Differenzkraft in der gewünschten Richtung auftritt. Dadurch, daß der innere Durchmesser des inneren Ventilsitzes 3 geringfügig größer bemessen wird als der innere Durchmesser der Zylinderdichtung 21, wird eine Kraft erzeugt, die den Steuerkolben 15 am inneren Ventilsitz 3 hält, wenn das Ventil geöffnet ist. In ähnlicher Weise hat der Innendurchmesser des äußeren Ventilsitzes 5 einen kleineren Wert als die Zylinderdichtung 21, so daß die resultierende Kraft den Steuerkolben 15 an dem äußeren Ventilsitz 5 hält, das Ventil ist geschlossen.

Sowohl der äußere als auch der innere Ventilsitz sind aus Plastikmaterial, während die übrigen Ventilteile aus Metall, vorzugsweise nichtrostendem Stahl, sind. Dadurch kann die Belastung, die erforderlich ist, um eine 100 %-ige Abdichtung am Innendurchmesser der Ventilsitze zu erzielen, gegenüber einer Metall-Metalldichtung beträchtlich verringert werden. Dies ist wichtig, da der Elektromagnet die hydraulischen Rastkräfte überwinden muß, die daher so klein wie möglich gehalten sein sollen.

Die Kräfte, welche der Elektromagnet überwinden muß, haben drei im wesentlichen gleiche Ursachen, nämlich die Rastkräfte, die Dichtreibung und die hydraulischen Strömungskräfte. Die Rastkräfte wurden bereits erwähnt und können durch geeignetes Plastikmaterial für die Ventilsitze minimiert werden.

Die Dichtungsreibung hat zwei Ursachen: die Zylinderdichtung 21 und die Ringdichtung 17 des Ventilstößels 16. Die Zylinderdichtung 21 ist immer dem Druck der Speiseleitung ausgesetzt und kann erhebliche Reibungskräfte erzeugen. Es wird daher eine Dichtung mit möglichst kleinem Durchmesser und Querschnitt gewählt, wobei der Stellkolben 20 eine hohe Oberflächengüte aufweist.

Die Ringdichtung 17 verhindert Undichtigkeiten zwischen der Rücklaufkammer 14 und dem Inneren des Elektromagneten. Bleibt der Ventilstößel für eine lange Zeit in einer Stellung, so kann die Ringdichtung 17 zum Kleben neigen, so daß eine Losbrechkraft erforderlich wird, die das Vielfache der normalen Losbrechkraft beträgt.

Durch Anlegen eines kurzen elektrischen Impulses an die Wicklung 32 wird der Anker 28 von der in Fig. 1 dargestellten Lage auf die Öffnung des Topfkerns 24 zu bewegt. Dadurch wird die Feder 35 zusammengedrückt, bis die von ihr auf den Ventilstößel 16 ausgeübte Kraft groß genug ist, um den Steuerkolben 15 in Richtung auf den inneren Ventilsitz 3 hin zu bewegen. Sobald er den Ventilsitz 3 erreicht hat, wird er hydraulisch verrastet.

Durch die Bewegung des Ventilstößels 16 im Elektromagneten 22 wird in der Bohrung 33 befindliches Medium komprimiert. Um bei Vorhandensein eines flüssigen Mediums einen Ausgleich zu schaffen, ist die Bohrung 33 durch einen Stopfen 42 mit einer Ausgleichsöffnung 43 verschlossen.

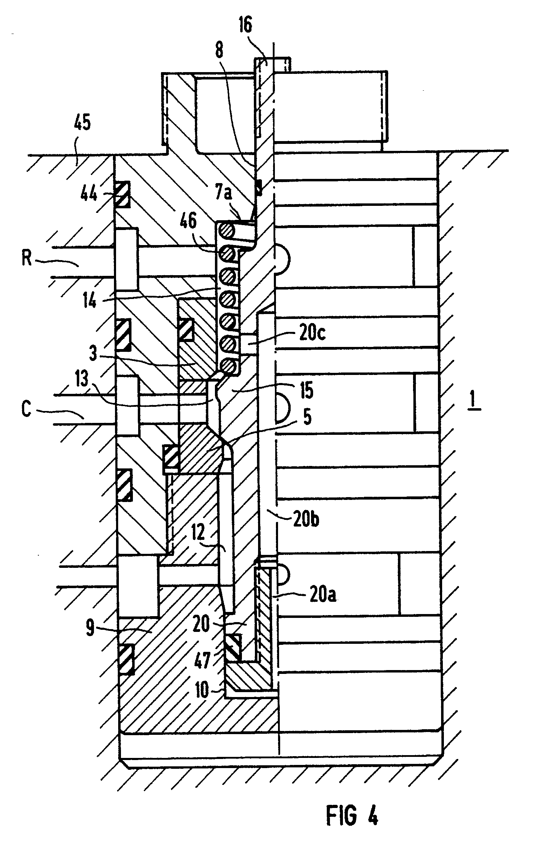

Bei dem in Fig. 4 gezeigten Magnetventil ist der Ventilkörper an seiner Außenseite mit Ringnuten versehen, welche weitere Ringdichtungen 44 aufnehmen. Sie dienen zur Abdichtung des Ventilkörpers 1, der in einem Gehäuse 45 angeordnet ist. Der Steuerkolben 15 liegt dichtend an dem äußeren Ventilsitz 5 an. Er wird in seiner Position durch eine Kombination aus dem Druck einer zusätzlichen Feder 46 und der Differenzkräfte gebildet, die infolge eines kleineren inneren Durchmesser des äußeren Ventilsitzes 5 und einem größeren inneren Durchmesser des Stellkolbens 20 erzeugt werden. Die zusätzliche Feder 46 ist dabei zweckmäßigerweise zwischen dem Boden 7a des Venitilkörpers 1 und einem Vorsprung des Steuerkolbens 15 koaxial zum Ventilstößel 16 angeordnet.

Der Stellkolben 20 hat eine Ringdichtung, die als Profildichtung 47 ausgebildet ist.

Bei einem Verlust des Speisedruckes übersteigt die Kraft der zusätzlichen Feder 46 die Dichtreibung und schließt das Ventil, so daß es die gezeigte Lage einnimmt.

## Ansprüche

1. Magnetventil für ein flüssiges oder gasförmiges Medium, bei dem in einer Ventilkammer ein Steuerkolben (15) in zwei Schaltstellungen bewegbar angeordnet ist, welcher über einen Ventilstößel (16) unter Zwischenschaltung einer Feder (36) mit einem Anker (28) verbunden ist, dem ein Elektromagnet (22) zum Umschalten von einer Schaltstellung in die andere und Mittel zum Verrasten des Steuerkolbens in zumindest einer Schaltstellung zugeordnet sind.

2. Magnetventil nach Anspruch 1, bei dem der Ventilkörper (1) aus einem korrosionsbeständigen Material gebildet ist, und der Elektromagnet (22) in einem korrosionsbeständigen Gehäuse (23) untergebracht und stirnseitig an den Ventilkörper (1) angesetzt sind.

3. Magnetventil nach Anspruch 1 oder 2, bei dem der Elektromagnet (22) durch zwei in dem Gehäuse (23) koaxial angeordnete Topfkerne (24, 25) gebildet sind, deren Öffnungen unter Zwischenschaltung des Ankers (28) einander zugekehrt sind und deren Mittelschenkel (29, 30) mit mindestens je einer elektrischen Wicklung (31 bzw. 32) und einer zentralen Bohrung (33) versehen sind, in welche der Ventilstößel (16) eingeführt und in welcher der Anker (28) geführt ist, der zwischen zwei Federn (35, 36) angeordnet am Ventilstößel (16) axial verschiebbar gelagert ist.

4. Magnetventil nach einem der Ansprüche 1 bis 3, bei dem der dem Anker (28) zugewandte Endbereich des Ventilstößels (16) eine Gewindebohrung (37a) aufweist, in die eine Schraube (38) eingedreht ist, an der zwischen den zwei Federn (35, 36) der Anker (28) verschiebbar gelagert ist.

5. Magnetventil nach Anspruch 4, bei dem die Gewindebohrung (37a) in einer Justierhülse (37) angeordnet ist, die in ein Außengewinde (41) am Endbereich des Ventilstößels (16) eingedreht ist.

6. Magnetventil nach einem der Ansprüche 1 bis 5, bei dem die Mittel zum Verrasten des Steuerkolbens durch einen mit dem Steuerkolben (15) axial verbundenen Stellkolben (20) gebildet sind, der in einem Zylinder geführt ist, welches sich an den Ventilraum (6) anschließt, in den das zu steuernde Medium eingeführt wird, wobei der innere Durchmesser der Öffnung eines äußeren Ventilsitzes (5) kleiner ist als der der Zylinderdichtung (21).

7. Magnetventil nach einem der Ansprüche 1 oder 6, bei dem die Mittel zum Verrasten des Steuerkolbens durch einen mit dem Steuerkolben (15) axial verbundenen Stellkolben (20) gebildet sind, der in einem Zylinder geführt ist, welcher sich an den Ventilraum (6) anschließt, in den das zu steuernde Medium eingeführt wird, wobei der innere Durchmesser der Öffnung eines inneren Ventilsitzes (3) geringfügig größer ist als der der Zylinderdichtung (21).

8. Magnetventil nach Anspruch 6 oder 7, bei der der Zylinder eine Zylinderdichtung (21) aufweist, die als Lippendichtung ausgebildet ist.

9. Magnetventil nach Anspruch 6 oder 7, bei dem der Stellkolben (20) eine Ringdichtung hat, die als Profildichtung (47) ausgebildet ist.

10. Magnetventil nach einem der Ansprüche 1 bis 9, bei dem eine zusätzliche Feder (46) in der Weise vorgesehen ist, daß der Steuerkolben (15) bei einem erheblichen Abfall des Speisedruckes des Mediums oder bei Erreichen des Umgebungsdruckes in einer vorgegebenen Lage, insbesondere in einer geschlossene Lage, gehalten wird.

11. Magnetventil nach Anspruch 10, bei dem die zusätzliche Feder (46) zwischen einem Boden (7a) des Ventilkörpers (1) und dem Steuerkolben 15 koaxial zum Ventilstößel (16) angeordnet ist.

12. Magnetventil nach Anspruch 6 oder 7, bei dem der Steuerkolben (15) aus Metall und der innere (3) und äußere Ventilsitz (5) aus einem Plastik-Material sind.

13. Verfahren zur Steuerung eines Magnetventils für ein flüssiges oder gasförmiges Medium, bei dem an eine Wicklung (31, 32) eines Elektromagneten (22), dem ein Anker (28) zugeordnet ist, ein elektrischer Steuerimpuls angelegt wird, durch die Bewegung des Ankers (28) eine Feder (34, 35) gespannt wird, durch die gespannte Feder ein in einer Ventilkammer (13) angeordneter Steuerkolben (15) mit zwei Schaltlagen von einer Schaltlage in die andere bewegt und der Steuerkolben in der erreichten Schaltlage verrastet wird.

14. Verfahren nach Anspruch 13, bei dem dann, wenn der Druck des zugeführten Mediums erheblich oder auf den Umgebungsdruck abfällt, der Steuerkolben (15) mittels einer zusätzlichen Feder (46) in einer vorgegebenen Lage, insbesondere in der geschlossenen Lage verrastet.

FIG 1

FIG 2

FIG 3

**FIG 4**

**Europäisches Patentamt**

# EUROPÄISCHER RECHERCHENBERICHT

Nummer der Anmeldung

EP 89 30 7999

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A- 658 304 (STEIGER) <br> * Seite 2, rechte Spalte, Zeile 21 - Seite 3, rechte Spalte, Zeile 2 * <br> --- | 1,3,6,7 | F 16 K 31/06 <br> F 16 K 11/044 |
| A | US-A-2 515 029 (ALMOND) <br> * Spalte 1, Zeile 37 - Spalte 4, Zeile 61 * <br> --- | 1,3 | |
| A | US-A-2 322 911 (BEAM) <br> * Seite 1, Zeile 45 - Seite 3, Zeile 62 * <br> ----- | 1,3 | |

| RECHERCHIERTE SACHGEBIETE (Int. Cl.5) |
|---|
| F 16 K <br> H 01 F |

Der vorliegende Recherchenbericht wurde für alle Patentansprüche erstellt

| Recherchenort | Abschlußdatum der Recherche | Prüfer |
|---|---|---|
| DEN HAAG | 26-03-1990 | VERELST P.E.J. |